## Europäisches Patentamt
## European Patent Office
## Office européen des brevets

(11) Publication number: **0 169 546**
**B1**

(12) **EUROPEAN PATENT SPECIFICATION**

(45) Date of publication of patent specification: **07.02.90**

(51) Int. Cl.⁵: **G 11 B 23/04**

(21) Application number: **85109223.9**

(22) Date of filing: **23.07.85**

(54) **Magnetic tape cassette.**

(30) Priority: **23.07.84 JP 152603/84**

(43) Date of publication of application:
**29.01.86 Bulletin 86/05**

(45) Publication of the grant of the patent:
**07.02.90 Bulletin 90/06**

(84) Designated Contracting States:
**AT DE FR GB NL SE**

(56) References cited:
**EP-A-0 139 181**
**DE-A-3 135 163**
**DE-A-3 327 092**
**US-A-4 004 752**
**US-A-4 348 707**

(73) Proprietor: **SONY CORPORATION**
**7-35 Kitashinagawa 6-Chome Shinagawa-ku**
**Tokyo 141 (JP)**

(72) Inventor: **Kawada, Hideaki**
**c/o Sony Corporation 7-35, Kitashinagawa 5-chome**
**Shinagawa-ku Tokyo (JP)**

(74) Representative: **Melzer, Wolfgang, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

Courier Press, Leamington Spa, England.

## Description

This invention relates to cassette with the features of the preamble part of claim 1, and is applicable to a magnetic tape cassette to be loaded into and used with a magnetic tape recorder (VTR) and, more particularly, to a device for determining specific conditions of the recording medium within the cassette.

In prior-art tape cassettes, in providing a cassette information necessary for preventing inadvertent erasure a partial cut-out is formed in the main body of the cassette half so as to be broken along a weakened edge, or an opening is formed in the bottom surface of the tape cassette so as to be stopped with a cap.

In the former method, since the cut-out is broken once and for all, the opening need be closed with e.g. an adhesive tape whenever re-recording is desired. It is also difficult to make a check as to whether the cut-out is broken to inhibit inadvertent erasure.

In the latter, the cap removed from the cassette may be lost or missing. It is also difficult to make a check as to whether the cap is in position in the cassette, since the opening for receiving the cap is formed in the bottom surface of the cassette.

Therefore it is known to provide cassettes with an erase interlock device movable between two operating positions (US—A—4348707).

A cassette with the features of the preamble part of claim 1 is known from DE—A1—33 27 092. The positioning means are used for detecting the condition of the recording medium. The known arrangement has a light source in a pin for detecting the tape end as the only tape condition when the cassette is inserted such that the pin is received in the opening of the cassette. If a very accurate positioning of the cassette is necessary, further measures become necessary. Moreover there lacks an element which permits free selection by the user of the condition of the recording medium to be detected.

There is known a cassette from US—A—40 04 752, which allows an accurate positioning through using specially formed positioning openings and pins. There is no means for the detection of the condition of the recording medium.

Also, since the positioning opening has an indented structure, the vicinity of the positioning opening tends to be deviated from the reference value as a result of deformation etc. of the bottom plate.

Moreover, with more than two different cassette sizes wherein the reel diameter and the outer size of the cassettes are different for different tape lengths, and wherein interchangeability is required between the cassettes to the respective outer sizes of the cassettes, the recording medium condition information supply means should be so arranged that

(a) for providing a simpler structure of the apparatus which needs the recording medium condition information, such as VTRs or tape recorders, the condition information supply position of the cassette should be at a common position irrespective of the difference in the outer size of the cassettes;

(b) the condition information should be switched easily between one and the other states or positions; and

(c) the switching state should be confirmed easily.

It is a principal object of the present invention to provide a cassette whereby the above functions can be fulfilled. This object is solved with a cassette having the features of the characterizing part of claim 1.

The cassette of the present invention comprises a plug element slidable within a connecting hole providable in a common position for two or more kinds of interchangeable tape cassettes of different outer sizes. This plug element enclosed within connecting hole in communication and alignment with the positioning opening in the cassette can be lockably changed in the height positions and the condition of the recording medium may be indicated by changing these height positions. The condition status is derived by a sensor of the positioning pin of the apparatus sensing these plug positions.

A preferred embodiment of the present invention is explained by referring to the accompanying drawings, wherein

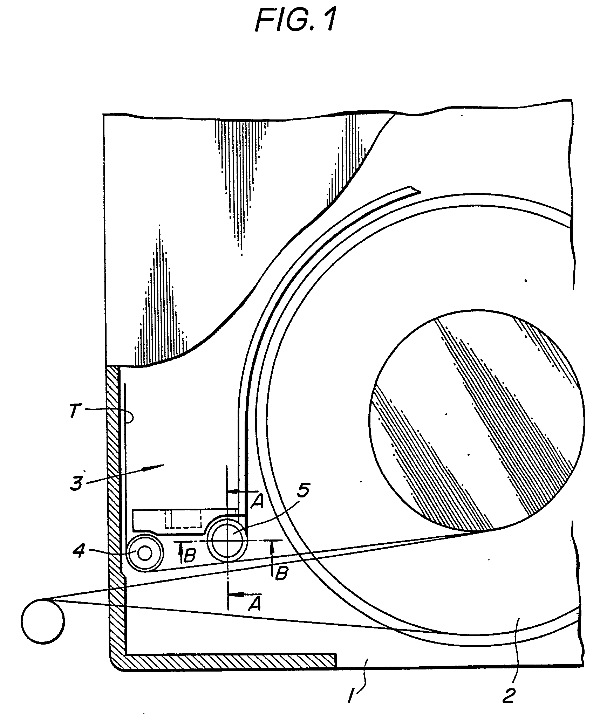

Fig. 1 is a plan view, partially cut away, of the tape cassette according to the present invention,

Fig. 2 is a sectional view taken along line A—A of Fig. 1,

Fig. 3 is a sectional view taken along line B—B of Fig. 1, with the plug element being shown at a higher position within the connecting hole,

Fig. 4 is a sectional view similarly taken along line B—B of Fig. 1 but with the plug element being shown in the lower position within the connecting hole,

Fig. 5 is a perspective view showing an example of a detecting and positioning pin,

Fig. 6 is an enlarged longitudinal section through the positioning pin.

In a tape cassette 1 are arranged a pair of tape reels 2 for rotation and in juxtaposition to each other. The numeral 3 designates a threading area normally closed by a lid, not shown, and opened during loading into a video tape recorder. Within the threading area 3, there may be disposed a tape extracting arm, not shown, of the video tape recorder, for extracting a tape T as recording medium travelling between said pair of reels 2 and for urging the tape T into sliding contact with the recording and/or reproducing head of the video tape recorder. In the drawings, the numerals 4 and 5 designate a tape guide and a tape cassette positioning opening 5, respectively.

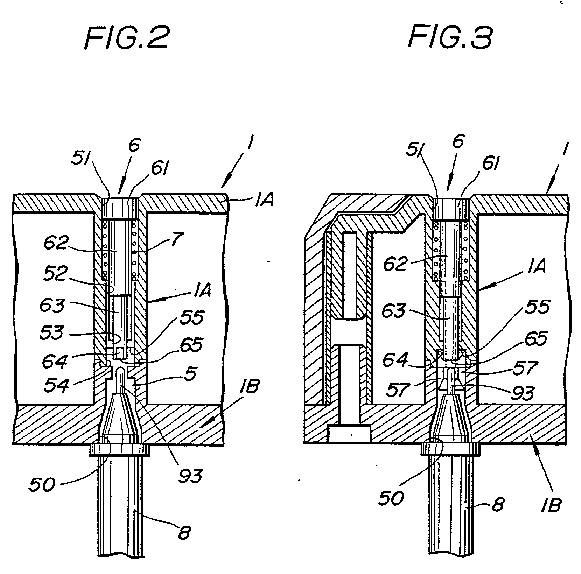

Referring to Figs. 2 to 4, a connecting hole is in communication and alignment with said positioning opening 5 and has a larger diameter section 51, a medium diameter section 52, a lesser diameter section 53 and a profiled section 54, in communication with each other, starting from the upper end. The opening 5 is terminated by a reference section 50.

In the connecting hole, a plug element 6 is fitted for sliding vertically, and normally biased upward, in the drawings, by a spring 7.

The plug element 6 is formed in succession by a larger diameter head portion 61, a medium diameter shank portion 62, and a lesser diameter shank portion 63, starting from the upper end. The lower end of the lesser diameter shank portion 63 is formed with a pair of engaging finger portions 64, 64.

Within the connecting hole, the larger diameter head portion 61 is slidably engaged in the larger diameter section 51, the medium diameter shank portion 62 is slidingly guided through the medium diameter section 52, and the lesser diameter shank portion 63 is passed through the lesser diameter section 53.

The engaging finger portions 64, 64 in the vicinity of the lower end of the shank portion 63 may be engaged with a step 55 contiguous to the lesser diameter section 53, as shown in Fig. 2 and 3, or with a step 56 at the lower end of the profiled section 54.

In switching between the upper and lower engaging positions of the finger portions 64, 64 in the profiled section 54, the plug element 6 disposed in the position shown in Figs. 2 and 3 is pushed down in the opening 5 against the force of the spring 7 until the finger portions 64, 64 are moved towards the lower end of the profiled section 54. The plug 6 element is then turned 90° about its axis until the finger portions 64, 64 are engaged with the lower end step 56 of the profiled section 54 to inhibit restoration of the plug 6 upward within the positioning opening 5.

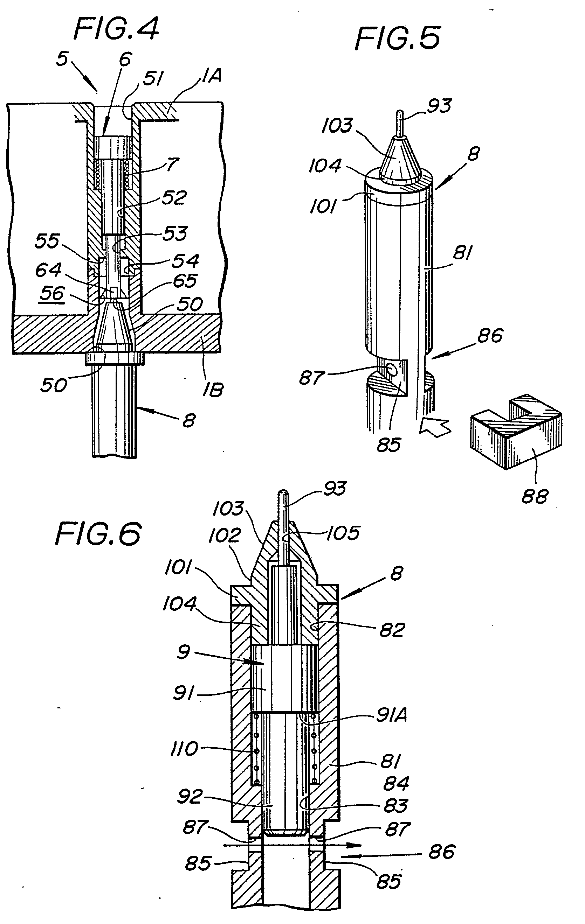

In switching the plug element 6 from the state of Fig. 4 to the state of Figs. 2 or 3, the plug element 6 is turned 90° about its axis from the state shown in Fig. 4 so that the finger portions 64, 64 are disposed within slits in the profiled section 54 of the opening 5 so as to be raised within the opening 5 under the resilience of the spring 7.

In this manner, by switching the plug element 6 between the position shown in Fig. 2 and 3 and that shown in Fig. 4, the lower end 65 of the plug element 6 in the connecting hole can be changed for changing or switching the depth of the lower end 65 from the opening end of the reference section 50.

The video tape recorder has a reference or positioning pin 8 for engaging with the positioning opening 5 for positioning the tape cassette 1.

The reference pin 8 is constructed as shown in Figs. 5 and 6. In these figures, an outer sleeve 81 has a hollow interior having an upper larger diameter section 82, a stepped section 84 and a lower lesser diameter section 83. Within the interior of the sleeve 81 is disposed a sensor member 9 having an intermediate larger diameter portion 91 slidably disposed within the larger diameter section 82, a lower shutter shank portion 92 slidably disposed within the lesser diameter section 83 and an upper sensor portion 93. On the top of the sleeve 81 is disposed a cap having an intermediate flange portion 101, a reference shank portion 102 and a taper shank portion 103 above the flange portion 101, and an engaging portion 104 engaging with the upper end of the sleeve 81. The cap has a through-hole 105 for guiding the sensor portion 93. Within the sleeve 81, a spring 110 is interposed between the lower end surface 91A of the larger diameter portion 91 and the step 84 for normally urging the sensor member 9 upwards or in the projecting direction of the sensor portion 93. A pair of chamfered steps 85, 85 are formed on the peripheral portion of the sleeve 81 corresponding to the lesser diameter section 83 for providing a recess 86. In these steps 85, 85, a pair of diametral through-holes 87, 87 are bored so that, when a sensor 88 is mounted within the recess 86, a light emitting element and a light receiving element are disposed in opposition to each other through these through-hole 87. The sensor 88 may be of the optical or mechanical type, as desired. In the present embodiment, with the sensor member 9 in the upper position within the sleeve 81, the through-holes 87, 87 are in communication with each other via the lesser diameter section and, when the sensor member 9 is pushed down against the force of the spring 110, the through-holes 87, 87 are interrupted from each other by the shutter shank portion 92.

The operation of sensing the condition of the tape T is now explained by referring again to Fig. 2 to 4.

With the plug element 6 in the upper position within the connecting hole, as shown in Figs. 2 and 3, the foremost part of the sensor portion 93 of the positioning pin 8 does not reach the lower end 65 of the plug element 6, even when the tape cassette 1 is set in position within the VTR. This means that the sensor member 9 is in the upper position for exposing the light path for the sensor 88.

When the plug 6 is moved to and held at the lower portion in the opening 5, as shown in Fig. 4, the sensor portion 93 of the positioning pin 9 is abutted and pressed down by the lower end 65 of the plug element 6. This causes the sensor member 9 to be pressed down as one with the sensor portion so that the light path for the sensor 88 is interrupted by the shutter shank portion 92, in such a manner that the specific condition of the cassette can be confirmed by the signals supplied from the sensor 88.

In mounting the plug 6 within the connecting hole of the cassette 1, the coil spring 7 is attached to the plug element and the spring-plug assembly is introduced into the connecting hole with phase registration between the longitudinal slits in the plug housing and the finger portions 64, 64 of the plug element 6. The spring-plug assembly is then turned 90° about its axis for temporarily engaging the finger portions with the step 55 contiguous to the lesser diameter section 53 of the opening 5 of the upper cassette half with top wall 1A. When the upper and lower cassette halves with top and bottom walls 1A, 1B are abutted and connected to each other, the slits are stopped by the lower half to inhibit the spring-plug assembly from disengaging from the cassette 1. Also, with the plug element attached to the upper cassette half, as shown in Figs. 2 and 3, the lower cassette half may be abutted to the upper half, and the plug 6 may then be pressed down in this state as shown in Fig. 4, the finger portions 64, 64 engaging at this time with the lower step 56 in the lower cassette half. In this manner, the upper and lower cassette halves can be temporarily connected together by the plug element 6 so that assemblying of the cassette halves can be facilitated.

The cassette information indicating the condition of the tape T therein can be switched easily by simply changing the height positions of the plug element 6.

**Claims**

1. A cassette comprising:
a housing having spaced top and bottom walls (1A, 1B) and a side wall extending between said top and bottom walls (1A, 1B) along a substantial portion of the housing and an aperture formed in one of said walls and through which, during recording and/or reproducing operation in an apparatus therefor, access is had to a recording medium (T) movably disposed within said housing,
said housing having a positioning opening (5) in said bottom wall (1B) for receiving a positioning pin (8) therein in an operative position of said cassette (1) in said apparatus and for detecting the condition of the recording medium (T)
characterized in that
said cassette (1) further has a connecting hole (50—54) formed in said housing in communication and alignment with said positioning opening (5) and opens through said top wall (1A), and
a plug element (6) is slidably inserted in said connecting hole (50—54) and lockable at first and second axial positions which respectively correspond to first and second conditions of the recording medium (T) within said housing so that said plug element (6) indicates one of said conditions by its position in the connecting hole (50—54).

2. A cassette according to claim 1, characterized in that said plug element (6) comprises a relatively large radius portion (61) at one end thereof which engages with inner surface of said connecting hole (50—54) and a relatively small radius portion (63) at the other end thereof.

3. A cassette according to claim 2, characterized in that said plug element (6) has a locking finger (64) at said relatively small radius portion (63), said locking finger (64) being projected at least toward one direction, and said connecting hole (50—54) has shoulder portions (55, 56) engaging with said finger portion (64) for locking said plug element (6) at said upward first and downward second positions.

4. A cassette according to claim 3, characterized in that said shoulder portions (55, 56) have a slit through which the relatively small radius portion (63) and the finger portion (64) of said plug element (6) pass the back side of said shoulder portions (55, 56), said slits of said shoulder portions (55, 56) having different directions to each other, whereby the finger portion (64) engages with the shoulder portions (55, 56) by rotating said plug element (6) by a predetermined angle.

5. A cassette according to any one of claims 1 to 4, characterized in that a spring means (7) is provided within said connecting hole (50—54) for urging said plug element (6) upwardly.

**Patentansprüche**

1. Kassette
mit einem Gehäuse, das eine obere Wand (1A), eine im Abstand zu dieser angeordnete Bodenwand (1B) und eine sich längs eines wesentlichen Teils des Gehäuses erstreckende Seitenwand besitzt,
mit einer in einer dieser Wände angebrachten Öffnung, durch die bei der Aufnahme und/oder Wiedergabe in einem hierzu vorgesehenen Gerät Zugang zu einem in dem Gehäuse beweglich angeordneten Aufzeichnungsmedium (T) gegeben ist,
sowie mit einer in der Bodenwand (1B) angebrachten Positionierungsöffnung (5) zur Aufnahme eines Positionierungstifts (8), wenn die Kassette (1) sich in einer Arbeitsposition in dem Gerät befindet,
dadurch gekennzeichnet,
daß in dem Gehäuse der Kassette (1) ferner eine Verbindungsbohrung (50—54) ausgebildet ist, die mit der Positionierungsöffnung (5) verbunden ist und zu dieser fluchtet und die durch die obere Wand (1A) offen zugänglich ist,
und daß in diese Verbindungsbohrung (50—54) ein Stöpselelement (6) gleitend eingesetzt ist, das in einer ersten und in einer zweiten axialen Position blockierbar ist, die einem ersten bzw. einem zweiten Zustand des Aufzeichnungsmediums (T) in dem Gehäuse entspreche, so daß das Stöpselelement (6) durch seine Position innerhalb der Verbindungsbohrung (50—54) einen dieser Zustände anzeigt.

2. Kassette nach Anspruch 1, dadurch gekennzeichnet, daß das Stöpselelement (6) an einem seiner Enden einen Abschnitt (61) mit relativ großem Radius besitzt, der an der Innenfläche der Verbindungsbohrung (50—54) anliegt, und daß an dem andern Ende des Stöpselelements (6) ein Abschnitt (63) mit relativ kleinem Radius ausgebildet ist.

3. Kassette nach Anspruch 2, dadurch gekennzeichnet, daß das Stöpselelement (6) an dem Abschnitt (63) mit relativ kleinem Radius einen Sperrfinger (64) trägt, der in wenigstens eine Richtung ragt, und daß die Verbindungsbohrung (50—54) Schultern (55, 56) besitzt, an denen der Sperrfinger (64) zur Blockierung in der oberen ersten und in der unteren zweiten Position zur Anlage kommt.

4. Kassette nach Anspruch 3, dadurch gekennzeichnet, daß die Schultern (55, 56) einen Schlitz haben, durch den der Abschnitt (63) mit relativ kleinem Radius und der Sperrfinger (64) des Stöpselelements (6) zur Rückseite der Schultern (55, 56) gelangen können, so daß der Sperrfinger (64) durch Drehen des Stöpselelements (6) um einen vorbestimmten Winkel an den Schultern (55, 56) zur Anlage gebracht werden kann.

5. Kassette nach einem der Ansprüche 1 bis 4, dadurch gekennzeichnet, daß in der Verbindungsbohrung (50—54) eine Feder (7) angeordnet ist, die das Stöpselelement (6) nach oben vorspannt.

## Revendications

1. Cassette comprenant:

un boîtier ayant des parois supérieure et inférieure distantes (1A, 1B) et une paroi latérale placée entre les parois supérieure et inférieure (1A, 1B) le long d'une partie importante du boîtier et un orifice formé dans l'une des parois et par laquelle, pendant l'opération d'enregistrement et/ou de lecture réalisée dans un appareil correspondant, l'accès à un support d'enregistrement (T) qui peut se déplacer dans le boîtier est permis,

le boîtier ayant une ouverture de positionnement (5) formée dans la paroi inférieure (1B) et destinée à loger une broche de positionnement (8) en position de travail de la cassette (1) dans l'appareil et à détecter l'état du support d'enregistrement (T),

caractérisée en ce que

la cassette (1) a en outre un trou de raccordement (50—54) formé dans le boîtier afin qu'il communique avec l'ouverture de positionnement (5) en étant aligné sur elle et débouche à travers la paroi supérieure (1A), et

un élément de cheville (6) introduit afin qu'il puisse coulisser dans le trou de raccordement (50—54) et qui peut être bloqué dans une première et une seconde position axiale qui correspondent respectivement au premier et au second état du support d'enregistrement (T) dans le boîtier, si bien que l'élément de cheville (6) indique l'un des états par sa position dans le trou de raccordement (50—54).

2. Cassette selon la revendication 1, caractérisée en ce que l'élément de cheville (6) comporte une partie (61) de rayon relativement grand, à une première extrémité qui est au contact de la surface interne du trou de raccordement (50—54) et une partie de rayon relativement faible (63) à l'autre extrémité.

3. Cassette selon la revendication 2, caractérisée en ce que l'élément de cheville (6) a un doigt de blocage (64) au niveau de la partie de diamètre relativement petit (63), le doigt de blocage (64) dépassant au moins vers un côté, et le trou de raccordement (50—54) a des parties d'épaulement (55, 56) coopérant avec la partie de doigt (64) et destinées à bloquer l'élément de cheville (6) dans la première position vers le haut et la seconde position vers le bas.

4. Cassette selon la revendication 3, caractérisée en ce que les parties d'épaulement (55, 56) ont une fente par laquelle la partie (63) de diamètre relativement petit et la partie de doigt (64) de l'élément de cheville (6) dépassent de la face arrière des parties d'épaulement (55, 56), les fentes des parties d'épaulement (55, 56) ayant des sens différents, si bien que la partie de doigt (64) coopère avec les parties d'épaulement (55, 56) par rotation d'un angle prédéterminé de l'élément de cheville (6).

5. Cassette selon l'une quelconque des revendications 1 à 4, caractérisée en ce qu'un dispositif à ressort (7) est placé dans le trou de raccordement (50—54) afin qu'il rappelle l'élément de cheville (6) vers le haut.

# FIG.1

# FIG.2

# FIG.3

FIG.4

FIG.5

FIG.6